# EUROPÄISCHE PATENTSCHRIFT

(11) **EP 0 549 844 B1**
(45) Veröffentlichungstag und Bekanntmachung des Hinweises auf die Patenterteilung: **22.05.1996**
(21) Anmeldenummer: 92100065.9
(22) Anmeldetag: 03.01.1992
(51) Int. Cl.: G21C 3/32, G21C 3/322

(54) **Kernreaktorbrennelement**
Fuel assembly for nuclear reactor
Assemblage combustible pour réacteur nucléaire

(43) Veröffentlichungstag der Anmeldung: 07.07.1993
(73) Patentinhaber: SIEMENS AKTIENGESELLSCHAFT, D-80333 München (DE)
(72) Erfinder: Meier, Werner, W-8551 Kunreuth (DE); Rau, Peter, Dipl.-Ing. (FH), W-8551 Leutenbach (DE)

(56) Entgegenhaltungen:
- EP-A- 0 054 827
- EP-A- 0 099 323
- EP-A- 0 224 728
- WO-A-91/13441
- DE-A- 3 533 317

## Beschreibung

Die Erfindung betrifft ein Kernreaktorbrennelement entsprechend dem Oberbegriff des Patentanspruchs 1.

Ein derartiges Kernreaktorbrennelement ist aus PCT WO91/13441 bekannt. Bei diesem bekannten Kernreaktorbrennelement ist das Wasserrohr mit seinem einen Ende in den Brennelementfuß eingeschraubt. Zwei zueinander parallele langgestreckte Verlängerungskörper sind mit ihrem ersten Ende in das andere Ende des Wasserrohres eingeschraubt, durchgreifen mit ihrem zweiten Ende den Brennelementkopf und sind jeweils mit einer Mutter an diesem Brennelementkopf festgeschraubt.

Beim fernbedienten Handhaben der beiden Muttern kann es von Bedeutung sein, daß der Anfang der Gewinde an den zweiten Enden der Verlängerungskörper eine vorgegebene Position einnimmt. Dieses Einnehmen einer vorgegebenen Position ergibt sich in der Regel nicht von selbst, da die Herstellung von drehorientierten Gewinden an beiden Enden der langgestreckten Verlängerungskörper nur mit sehr großem Aufwand möglich ist. Auch ergibt sich beim Anziehen der langgestreckten Verlängerungskörper im Wasserrohr ein Toleranzbereich für die Ausrichtung des Gewindes am ersten Ende der beiden Verlängerungskörper selbst dann, wenn das Gewinde im Wasserrohr in bezug auf die Gewinde an beiden Enden des in ihm eingeschraubten Verlängerungskörpers drehorientiert ausgeführt wäre.

Der Erfindung liegt die Aufgabe zugrunde, das bekannte Kernreaktorbrennelement weiterzubilden und ein drehorientiertes Haltern des zweiten Endes eines langgestreckten Verlängerungskörper am Brennelementkopf mit verhältnismäßig geringem Aufwand zu ermöglichen.

Zur Lösung dieser Aufgabe hat ein Kernreaktorbrennelement der eingangs erwähnten Art erfindungsgemäß die Merkmale des kennzeichnenden Teils des Patentanspruchs 1.

Die beiden Teilkörper des langgestreckten Verlängerungskörpers können gegeneinander verdreht werden, bis das zweite Ende des langgestreckten Verlängerungskörpers die für ein drehorientiertes Haltern am Brennelementkopf erforderliche Position hat, die anschließend beispielsweise durch Verspannen einer Kontermutter auf einem Teilkörper gegen den anderen Teilkörper spielfrei festgehalten wird.

Die Patentansprüche 2 bis 7 sind auf vorteilhafte Ausbildungen des Gegenstands des Patentanspruchs 1 gerichtet.

Die Erfindung und ihre Vorteile seien anhand der Zeichnung an einem Ausführungsbeispiel näher erläutert:

Figur 1 zeigt in Seitenansicht und teilweise längsgeschnitten ein für einen Siedewasserkernreaktor bestimmtes Kernreaktorbrennelement entsprechend der Erfindung.

Figur 2 zeigt in Seitenansicht und ebenfalls teilweise längsgeschnitten sowie in vergrößerter Darstellung den langgestreckten Verlängerungskörper am Wasserrohr des Kernreaktorbrennelements nach Figur 1.

Figur 3 zeigt einen Querschnitt durch einen Brennelementkopf und den langgestreckten Verlängerungskörper entsprechend der strichpunktierten Linie III-III in Figur 2.

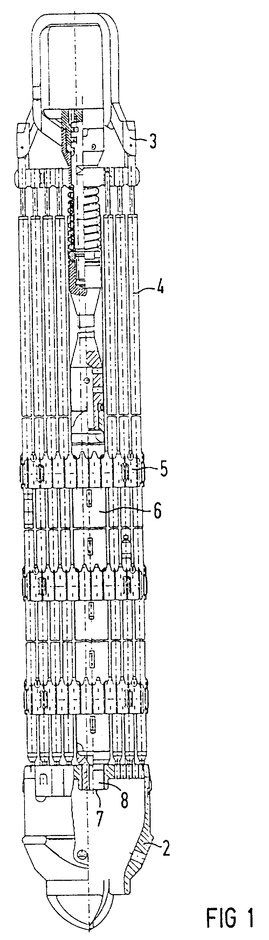

Das Kernreaktorbrennelement nach Figur 1 hat einen Brennelementfuß 2 und einen Brennelementkopf 3, zwischen denen zueinander parallele Brennstäbe 4 angeordnet sind. Diese Brennstäbe 4 enthalten in einem an beiden Enden gasdicht verschlossenen Hüllrohr Kernbrennstoff. Mit einem Ende durchgreift jeder Brennstab 4 lose eine Durchführung im Brennelementkopf 3, während er mit dem anderen Ende lose auf dem Brennelementfuß 2 aufsteht. Jeder Brennstab 4 ist durch jeweils eine Masche mehrerer gitterförmige Abstandhalter 5 geführt, die ebenfalls zwischen Brennelementfuß 2 und Brennelementkopf 3 in Längsrichtung des Kernreaktorbrennelements gesehen nebeneinander mit Abstand voneinander angeordnet sind.

Brennelementfuß 2 und Brennelementkopf 3 haben jeweils quadratische Kontur, und im Zentrum dieser quadratischen Kontur ist ein Wasserrohr 6 angeordnet, das quadratischen Querschnitt hat. Jeweils zwei zueinander parallele Seiten dieses quadratischen Querschnitts sind zu zwei zueinander parallelen Seiten der quadratischen Kontur von Brennelementfuß 2 und Brennelementkopf 3 parallel.

Am Unterende ist das Wasserrohr 6 offen und mit diesem Unterende 7 in eine Durchführung 8 im Brennelementfuß 2 eingeschraubt.

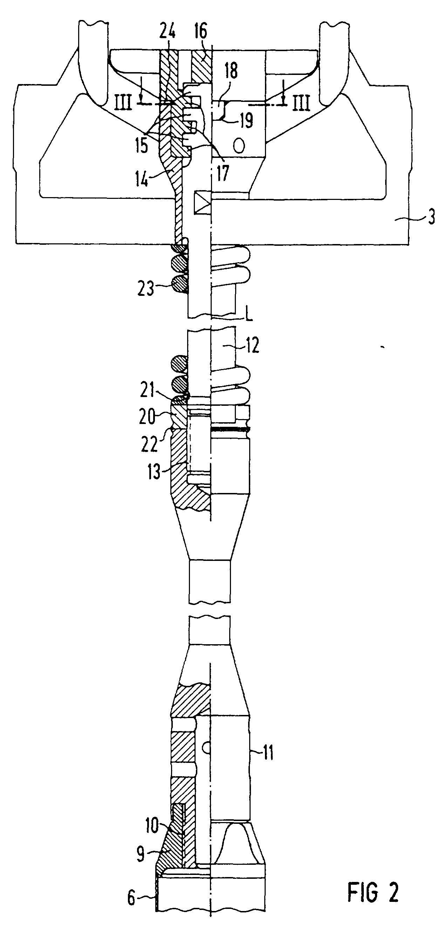

Wie Figur 2 besonders deutlich zeigt, ist am Oberende des Wasserrohres 6 ein Endstopfen 9 eingesetzt und mit dem Wasserrohr 6 verschweißt. Dieser Endstopfen 9 hat eine zum Wasserrohr 6 koaxiale Durchführung 10, in die das erste Ende eines Teilkörpers 11 eingeschraubt ist, der Austrittskanäle für Wasser aus dem Wasserrohr 6 aufweist und der mit einem weiteren Teilkörper 12, der koaxial zum Teilkörper 11 und zum Wasserrohr 6 ist, einen langgestreckten Verlängerungskörper am Oberende des Wasserrohres 6 bildet. Der zum Teilkörper 11 koaxiale Teilkörper 12 ist mit einem ersten Ende 13 in das zweite Ende des Teilkörpers 11 eingeschraubt, während das zweite Ende des Teilkörpers 12 in das Unterende einer Hülse 14 in Brennelementkopf 3 greift.

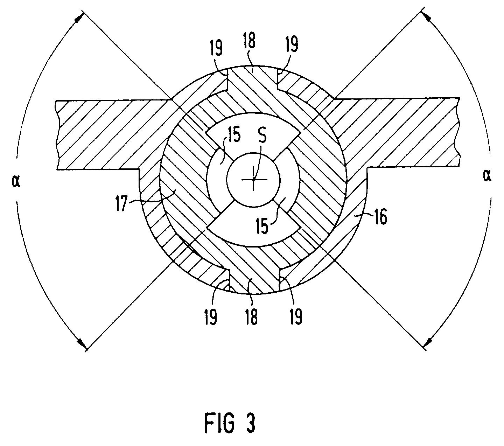

Der Teilkörper 12 weist am zweiten Ende außen am Mantel drei Paare radial gerichteter Zungen 15 auf, die in Längsrichtung des Teilkörpers 12 Abstand voneinander haben. Die beiden Zungen 15 eines jeden Paares sind durch die Schenkel zweier Scheitelwinkel α in bezug auf den Durchstoßpunkt S der Längsachse L des Teilkörpers 12 im Querschnitt nach Figur 3 gebildet. Die Scheitelwinkel α sind für alle Paare von Zungen 15 gleich groß und kleiner als 90°. Ferner fluchten alle drei Paare von Zungen 15 miteinander, so daß diese Zungen 15 in bezug auf die Längsachse L des Teilkörpers 12 drehorientiert sind.

In das Oberende der Hülse 14 ist zur Ausbildung einer Bajonettverbindung zwischen dem Teilkörper 12 und dem Brennelementkopf 3 eine Überwurfhülse 16 eingesetzt, die zum Teilkörper 12 koaxial ist und die um ihre Längsachse in der Hülse 14 drehbar ist. Außerdem weist die Überwurfhülse 16 außen am Mantel eine Stufe 24 auf, mit der sich diese Überwurfhülse 16 auf der Kante der Hülse 14 an deren Oberende abstützt. Innen am Mantel weist die Überwurfhülse 16 drei Paare von Zungen 17 auf, die in Richtung der Längsachse der Überwurfhülse 16 und damit des Teilkörpers 12 Abstand voneinander haben. Diese Paare von Zungen 17 sind ebenfalls durch die Schenkel der beiden Scheitelwinkel α begrenzt, die gleich groß sind wie die die Zungen 15 begrenzenden Scheitelwinkel α . Die Paare der Zungen 17 in der Überwurfhülse 16 fluchten ebenfalls in Richtung der Längsachse der Überwurfhülse 16 gesehen. Ferner hintergreifen diese Zungen 17 der Überwurfhülse 16 die Zungen 15 am Teilkörper 12, wenn zwei außen am Mantel der Überwurfhülse 16 in einem Durchmesser dieser Überwurfhülse 16 angeordnete Nasen 18 jeweils in eine Nut 19 in der Kante am Oberende der Hülse 14 eingerastet ist. Beide Nuten 19 befinden sich ebenfalls auf einen Durchmesser der Hülse 14.

Am in den Teilkörper 11 eingeschraubten Ende des Teilkörpers 12 befindet sich ein Gewinde, auf dem eine Kontermutter 20 sitzt, die gegen den Teilkörper 11 verspannt ist. Mit dem Teilkörper 12 ist die Kontermutter 20 zur Drehsicherung mit einer Kehlnaht 21 verschweißt, von der das Gewinde in der Kontermutter 20 und das zugeordnete Gewinde auf dem Teilkörper 12 Abstand haben. Mit dem Teilkörper 11 ist die Kontermutter 20 in einer Lippen- oder V-Naht 22 verschweißt.

Außen auf dem Teilkörper 12 sitzt ferner eine zum Teilkörper 12 koaxiale, auf Druck beanspruchte Schraubenfeder 23, die sich mit einem Ende auf der Kontermutter 20 und mit dem anderen Ende am Brennelementkopf 3 abstützt und so die Nasen 18 außen an der Überwurfmutter 16 in die Nuten 19 an der Kante am Oberende der Hülse 14 preßt.

Der in den Teilkörper 11 eingeschraubte Teilkörper 12, auf dem bereits die Schraubenfeder 23 und die Kontermutter 20 sitzen, wird in bezug auf das einen quadratischen Querschnitt aufweisende Wasserrohr 6 ausgerichtet. Sodann wird die Kontermutter 20 gegen den Teilkörper 11 verspannt und sowohl am Teilkörper 12 als auch am Teilkörper 11 festgeschweißt. Hierauf wird der Brennelementkopf 3 auf den Teilkörper 12 aufgeschoben, so daß die Brennstäbe 4 mit ihrem einen Ende in den Brennelementkopf 3 greifen. Die Überwurfhülse 16 wird sodann auf das Oberende des Teilkörpers 12 aufgesetzt. Da die Zungen 15 außen am Oberende des Teilkörpers 12 drehorientiert sind, passen hierbei die Zungen 17 innen am Mantel der Überwurfhülse 16 genau zwischen den Zungen 15 außen am Mantel des Teilkörpers 12 hindurch. Durch Drehen der Überwurfhülse 16 um ihre Längsachse um 90° verrasten die Nasen 18 außen an der Überwurfhülse 16 in den beiden Nuten 19 am Oberende der Hülse 14, so daß der Brennelementkopf 3 am Teilkörper 12 gehaltert ist.

## Patentansprüche

1. Kernreaktorbrennelement mit einem Brennelementfuß und einem Brennelementkopf, mit zueinander parallelen, Kernbrennstoff enthaltenden Brennstäben, die sich zwischen Brennelementkopf und Brennelementfuß befinden, mit einem an beiden Enden offenen, zu den Brennstäben parallelen Wasserrohr, das mit einem Ende in den Brennelementfuß greift und an diesem Brennelementfuß gehaltert ist und dessen anderes Ende mit einem langgestreckten Verlängerungskörper versehen ist, der mit einem ersten Ende am Wasserrohr gehaltert ist und der mit dem anderen, zweiten Ende in den Brennelementkopf greift und an diesem Brennelementkopf gehaltert ist,
**dadurch gekennzeichnet,**
daß der langgestreckte Verlängerungskörper zwei zueinander koaxial angeordnete Teilkörper (11, 12) aufweist, von denen der eine (12) das in den Brennelementkopf (3) greifende zweite Ende des Verlängerungskörpers und der andere (11) das erste Ende des Verlängerungskörpers bildet, das am Wasserrohr (6) gehaltert ist,
daß einer der Teilkörper (11, 12) in den anderen Teilkörper (12, 11) eingeschraubt ist und daß die Verdrehungsposition des das zweite Ende des Verlängerungskörpers bildenden Teilkörpers (12) in bezug auf den das erste Ende bildenden Teilkörper (11) festgehalten ist.

2. Kernreaktorbrennelement nach Anspruch 1,
**dadurch gekennzeichnet,** daß das Wasserrohr (6) mit dem in den Brennelementfuß (2) greifenden Ende in den Brennelementfuß (2) eingeschraubt ist.

3. Kernreaktorbrennelement nach Anspruch 1,
**dadurch gekennzeichnet,** daß der Verlängerungskörper mit dem zweiten Ende den Brennelementkopf (3) lose durchgreift und an diesem zweiten Ende mit einer Bajonettverbindung gehaltert ist.

4. Kernreaktorbrennelement nach Anspruch 1,
**dadurch gekennzeichnet,** daß auf dem Teilkörper (12), der in den anderen Teilkörper (11) eingeschraubt ist, eine gegen diesen anderen Teilkörper (11) verspannte Kontermutter (20) sitzt.

5. Kernreaktorbrennelement nach Anspruch 4,
**dadurch gekennzeichnet,** daß die Kontermutter (20) mit dem Teilkörper (12), auf dem diese Kontermutter (20) sitzt, in einer Kehlnaht (21) verschweißt ist.

6. Kernreaktorbrennelement nach Anspruch 5,
**dadurch gekennzeichnet,** daß das Gewinde in der Kontermutter (20) und das zugeordnete Gewinde auf dem Teilkörper (12), auf dem diese Kontermutter (20) sitzt, Abstand von der Kehlnaht (21) haben.

7. Kernreaktorbrennelement nach Anspruch 4,
**dadurch gekennzeichnet,** daß die Kontermutter (20) mit dem Teilkörper (11), gegen den sie verspannt ist, in einer Lippen- oder V-Naht (22) verschweißt ist.

## Claims

1. Reactor fuel element having a fuel element foot and a fuel element head, having fuel rods parallel to each other and containing nuclear fuel, which fuel rods are located between the fuel element head and the fuel element foot, having a water pipe which is open at both ends, is parallel to the fuel rods, engages with one end into the fuel element foot and is supported at this fuel element foot, the other end of which water pipe being provided with an extended elongation body which is supported with a first end on the water pipe and which engages with the other, second end into the fuel element head and is supported on this fuel element head, characterized in that the extended elongation body has two partial bodies (11, 12) arranged coaxially with respect to each other, one of which (12) forms the second end of the elongation body engaging into the fuel element head (3) and the other one (11) forms the first end of the elongation body which is supported on the water pipe (6), in that one of the partial bodies (11, 12) is screwed into the other partial body (12, 11) and in that the position of rotation of the partial body (12) forming the second end of the elongation body is secured with respect to the partial body (11) forming the first end.

2. Reactor fuel element according to claim 1, characterized in that the water pipe (6) is screwed into the fuel element foot (2) with the end which engages into the fuel element foot (2).

3. Reactor fuel element according to claim 1, characterized in that the elongation body engages loosely through the fuel element head (3) with the second end and is supported at this second end by a bayonet connection.

4. Reactor fuel element according to claim 1, characterized in that on the partial body (12) which is screwed into the other partial body (11) a counter nut (20) braced against this other partial body (11) is disposed.

5. Reactor fuel element according to claim 4, characterized in that the counter nut (20) is welded to the partial body (12) on which this counter nut (20) is disposed, in a fillet weld (21).

6. Reactor fuel element according to claim 5, characterized in that the thread in the counter nut (20) and the associated thread on the partial body (12), on which this counter nut (20) is disposed, are at a distance from the fillet weld (21).

7. Reactor fuel element according to claim 4, characterized in that the counter nut (20) is welded to the partial body (11), against which it is braced, in a lip weld or single V groove (22).

## Revendications

1. Assemblage combustible de réacteur nucléaire comportant une pièce inférieure d'assemblage et une pièce supérieure d'assemblage, des crayons combustible contenant du combustible, qui sont disposés entre la pièce inférieure d'assemblage et la pièce supérieure d'assemblage, un conduit pour l'eau parallèle aux crayons, ouvert à ses deux extrémités dont l'une pénètre dans la pièce inférieure d'assemblage et qui est maintenu à cette pièce inférieure d'assemblage et dont l'autre extrémité est munie d'un prolongement oblong, qui est maintenu par une première extrémité au conduit d'eau et qui pénètre dans la pièce supérieure d'assemblage par l'autre seconde extrémité et qui est maintenu à cet assemblage combustible, caractérisé en ce que le prolongement oblong comporte deux parties (11,12) disposées coaxialement l'une par rapport à l'autre, dont la première (12) forme la seconde extrémité du prolongement qui pénètre dans la pièce (3) supérieure d'assemblage et dont l'autre (11) forme la première extrémité du prolongement, qui est maintenu au conduit (6) d'eau, en ce que l'une des parties (11,12) est vissée dans l'autre (12,11) partie et en ce que le point de pivotement de la partie (12) qui forme la seconde extrémité du prolongement par rapport à la partie (11) qui forme la première extrémité est maintenu fixe.

2. Assemblage combustible de réacteur nucléaire selon la revendication 1 le conduit (6) d'eau est vissé par son extrémité pénétrant dans la pièce (2) inférieure d'assemblage dans la pièce (2) inférieure d'assemblage.

3. Assemblage combustible de réacteur nucléaire selon la revendication 1, caractérisé en ce que le prolongement passe à travers la seconde extrémité de la pièce (3) supérieure d'assemblage de manière lâche et est fixé à cette seconde extrémité par une liaison à baïonnette.

4. Assemblage combustible de réacteur nucléaire selon la revendication 1, caractérisé en ce que sur la partie (12) , qui est vissée à l'autre partie (11), se trouve un contre écrou (20) bloqué contre cette autre partie (11).

5. Assemblage combustible de réacteur nucléaire selon la revendication 4, caractérisé en ce que le contre-écrou (20) est soudé dans une soudure (21) d'angle à la partie (12), sur laquelle repose ce contre-écrou (20.)

6. Assemblage combustible de réacteur nucléaire selon la revendication 5, caractérisé en ce que le filetage du contre-écrou (20) et le taraudage associé sur la partie (12), sur laquelle repose ce contre-écrou (20), sont à distance de la soudure (21) d'angle.

7. Assemblage combustible de réacteur nucléaire selon la revendication 4, caractérisé en ce que le contre-écrou (20) est soudé à la partie (11), contre laquelle il est bloqué en un cordon (22) de soudure en V ou à lèvre.
